# EUROPEAN PATENT APPLICATION

(11) **EP 4 654 354 A1**
(43) Date of publication of application: **26.11.2025**
(21) Application number: 24865627.4
(22) Date of filing: 24.06.2024
(51) Int. Cl.: H01M 50/289, H01M 50/213, H01M 50/249

(54) **BATTERY PACK**

(30) Priority: 11.09.2023 KR 20230120713
(71) Applicant: LG Energy Solution, Ltd., Seoul 07335 (KR)
(72) Inventor: AHN, Jun-Young, Daejeon 34122 (KR); PARK, So-Jeong, Daejeon 34122 (KR); SONG, Jong-Min, Daejeon 34122 (KR); OH, Kwang-Keun, Daejeon 34122 (KR); LEE, Yong-Ho, Daejeon 34122 (KR); JUNG, In-Hyuk, Daejeon 34122 (KR); YANG, Jin-Oh, Daejeon 34122 (KR)
(74) Representative: Goddar, Heinz J.
(86) International application number: PCT/KR2024/008722
(87) International publication number: WO 2025/058183

(57) **Abstract**

A battery pack is disclosed. The battery pack according to an embodiment of the present disclosure includes a base plate; an outer side wall coupled to an upper surface of the base plate; a plurality of battery cells located on the base plate and forming an array; and an inner side wall coupled to the upper surface of the base plate, and located between the plurality of battery cells and the outer side wall.

## Description

### TECHNICAL FIELD

The present disclosure relates to a battery pack.

This application is based on and claims priority from Korean Patent Application No. 10-2023-0120713, filed on September 11, 2023, with the Korean Intellectual Property Office, the disclosure of which is incorporated herein in its entirety by reference.

### BACKGROUND

There has been a dramatic increase in demand for portable electronic products such as laptop computers, video cameras and mobile phones, and with the widespread use of robots and electric vehicles, many studies are being made on high performance secondary batteries that can be recharged repeatedly.

Currently, commercially available secondary batteries include nickel-cadmium batteries, nickel-hydrogen batteries, nickel-zinc batteries, lithium secondary batteries and the like, and among them, lithium secondary batteries have little or no memory effect, and thus they are gaining more attention than nickel-based secondary batteries for their advantages that recharging can be done whenever it is convenient, the self-discharge rate is very low and the energy density is high.

Lithium secondary batteries primarily use lithium-based oxide and carbon materials as a positive electrode active material and a negative electrode active material, respectively. A lithium secondary battery includes an electrode assembly including a positive electrode plate and a negative electrode plate respectively coated with the positive electrode active material and the negative electrode active material with a separator interposed between the positive electrode plate and the negative electrode plate, and an outer packaging material or a battery case accommodating the electrode assembly and an electrolyte solution in an air-tight manner.

In general, lithium secondary batteries may be classified into can-type secondary batteries in which the electrode assembly is included in a metal can and pouch-type secondary batteries in which the electrode assembly is included in a pouch of an aluminum laminate sheet, according to the shape of the outer packaging material.

Recently, secondary batteries are widely used for power or energy storage in not only small devices such as mobile electric devices but also medium- or large-sized devices such as electric vehicles or Energy Storage Systems (ESS). A plurality of secondary batteries may be electrically connected and received in a module case to form a battery module. Additionally, a plurality of battery modules may be connected to form a battery pack.

Because medium- or large-scale battery packs for electric vehicles include a large number of battery cells and battery modules to increase the output and/or capacity, the weight may greatly increase. Accordingly, there is a need for a structure for increasing stiffness and energy density of the battery pack.

### DISCLOSURE

### Technical Problem

An object of the present disclosure is to solve these and other problems.

Another object of the present disclosure is to provide a battery pack with improved assembly efficiency.

Still another object of the present disclosure is to provide a battery pack with improved energy density.

### Technical Solution

To achieve the above-described objectives, a battery pack according to an embodiment of the present disclosure includes a base plate; an outer side wall coupled to an upper surface of the base plate; a plurality of battery cells located on the base plate and forming an array; and an inner side wall coupled to the upper surface of the base plate, and located between the plurality of battery cells and the outer side wall.

The battery pack may further include a fastening member configured to fasten the base plate to the inner side wall.

Additionally, the base plate may include a flat portion; and a bending portion protruded upward from the flat portion, and the inner side wall may be coupled to the bending portion.

Additionally, the bending portion may be located on an inner side of the outer side wall.

Additionally, the bending portion and the inner side wall may extend along an edge of the base plate.

Additionally, the battery pack may further include a fastening member passing through the bending portion and configured to fasten the base plate to the inner side wall.

Additionally, at least some of the plurality of battery cells may be fixed to the inner side wall.

Additionally, a gap may be formed between the battery cells fixed to the inner side wall and the flat portion.

Additionally, the inner side wall may include a guide that protrudes outward, and the guide may be mounted on the outer side wall.

Additionally, the outer side wall may include an accommodation groove on top, and the guide may be received in the accommodation groove.

Additionally, the outer side wall may include a pair of protrusions on top, and the guide may be located between the pair of protrusions.

A vehicle according to an aspect of the present disclosure includes the battery pack of the present disclosure.

### Advantageous Effects

According to at least one of the embodiments of the present disclosure, it may be possible to improve stiffness of the battery pack.

According to at least one of the embodiments of the present disclosure, it may be possible to improve energy density of the battery pack.

### BRIEF DESCRIPTION OF THE DRAWINGS

The accompanying drawings illustrate exemplary embodiments of the present disclosure and together with the following detailed description, serve to provide a better understanding of the technical aspect of the present disclosure, and thus the present disclosure should not be construed as being limited to the drawings.
FIG. 1 is a perspective view of a battery pack according to an embodiment of the present disclosure.
FIG. 2 is an exploded view showing some components of a battery pack according to an embodiment of the present disclosure.
FIG. 3 is a diagram showing an inner side wall of a battery pack according to an embodiment of the present disclosure.
FIG. 4 is a diagram showing an inner side wall and battery cells of a battery pack according to an embodiment of the present disclosure.
FIG. 5 is a perspective view showing a cross section taken along the line A-A' in FIG. 4.
FIG. 6 is a diagram showing an inner side wall and battery cells of a battery pack according to an embodiment of the present disclosure.
FIG. 7 is an exploded view showing some components of a cell array structure of a battery pack according to an embodiment of the present disclosure.
FIG. 8 is a perspective view showing a cell array structure of a battery pack according to an embodiment of the present disclosure.
FIG. 9 is a perspective view showing a base plate of a battery pack according to an embodiment of the present disclosure.
FIG. 10 is a diagram showing a base plate of a battery pack according to an embodiment of the present disclosure when viewed from bottom.
FIG. 11 is a perspective view showing a base plate and an outer side wall of a battery pack according to an embodiment of the present disclosure.
FIG. 12 is a diagram showing some components of a battery pack according to an embodiment of the present disclosure.
FIG. 13 is a perspective view showing some components of a battery pack according to an embodiment of the present disclosure when viewed from bottom.
FIG. 14 is a schematic cross-sectional view of FIG. 12, taken along the line B-B'.
FIG. 15 is a perspective view showing a cross section taken along the line C-C' in FIG. 12.
FIG. 16 is a perspective view showing a cross section taken along the line D-D' in FIG. 12.
FIG. 17 is a diagram showing a variation of FIG. 16.
FIG. 18 is a diagram showing another variation of FIG. 16.

### BEST MODE

Hereinafter, exemplary embodiments of the present disclosure will be described in detail with reference to the accompanying drawings. Prior to the description, it should be understood that the terms or words used in the specification and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

Therefore, the description provided herein and illustrations in the drawings are provided to describe some exemplary embodiments of the present disclosure, but not intended to fully describe the technical aspect of the present disclosure, so it should be understood that a variety of other equivalents and modifications could have been made thereto at the time of filing the patent application.

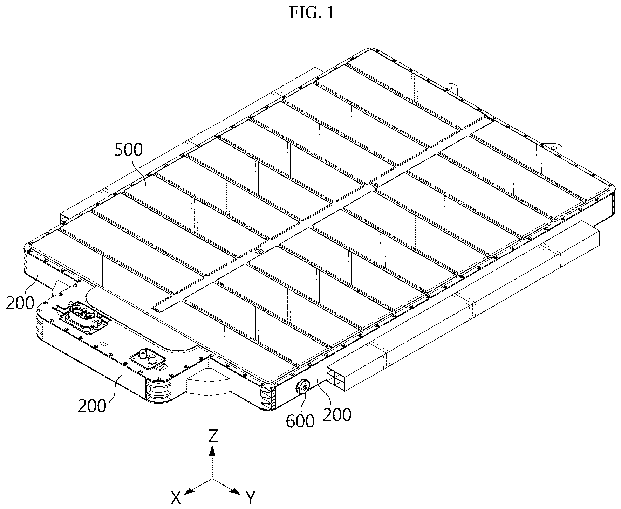

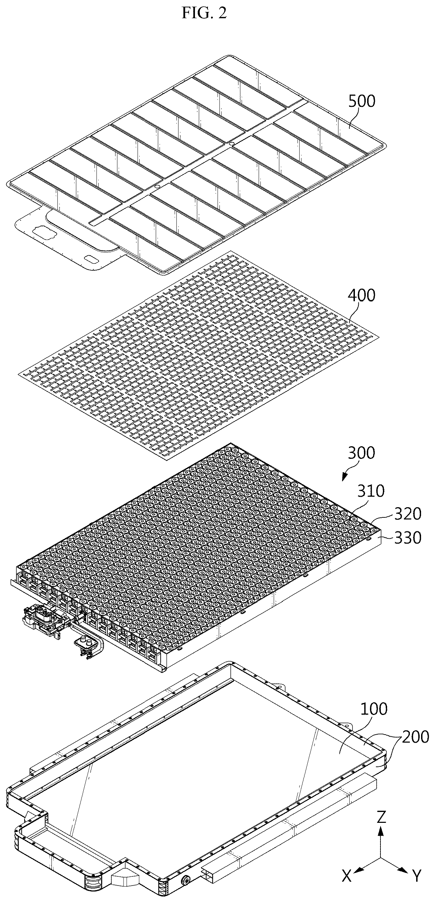

FIG. 1 is a perspective view of a battery pack according to an embodiment of the present disclosure. FIG. 2 is an exploded view showing some components of the battery pack according to an embodiment of the present disclosure. Referring to FIGs. 1 and 2, the battery pack according to an embodiment of the present disclosure may include a base plate 100, an outer side wall 200, a plurality of battery cells 310 and an inner side wall 330.

The base plate 100 may have a flat plate shape. The base plate 100 may be approximately rectangular in shape.

The outer side wall 200 may be fastened, coupled, fixed or attached to the upper surface of the base plate 100. The outer side wall 200 and the base plate 100 may form an internal space.

The plurality of battery cells 310 may be received in the internal space. The plurality of battery cells 310 may be arranged to form an array. The plurality of battery cells 310 may be located on the base plate 100. In this instance, the battery cell 310 may refer to a secondary battery. Additionally, the battery cell 310 may be a secondary battery having a cylindrical shape.

The inner side wall 330 may be fastened, coupled, fixed or attached to the upper surface of the base plate 100. The inner side wall 330 may be located between the plurality of battery cells 310 and the outer side wall 200.

By this configuration of the present disclosure, the battery pack may stably accommodate the plurality of battery cells 310. The inner side wall 330 may stably support the plurality of battery cells 310. Accordingly, stiffness of the battery pack may be improved.

Referring to FIGs. 1 and 2, the battery pack according to an embodiment of the present disclosure may include a busbar assembly 400 and a pack cover 500. The pack cover 500 may cover the internal space of the battery pack. The pack cover 500 may have a plate shape. The pack cover 500 may have a similar shape to the base plate 100. The pack cover 500 may be fastened, coupled, fixed or attached to the outer side wall 200.

The busbar assembly 400 may be located between the plurality of battery cells 310 and the pack cover 500. The busbar assembly 400 may be physically connected to the top of the plurality of battery cells 310. Additionally, the busbar assembly 400 may be electrically connected to the plurality of battery cells 310.

A venting device 600 may be provided in the outer surface of the outer side wall 200. When the pressure in the battery pack rises, the venting device 600 may vent gases.

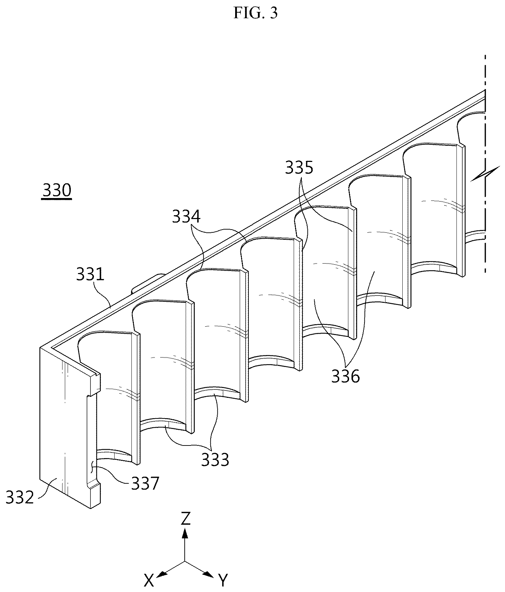

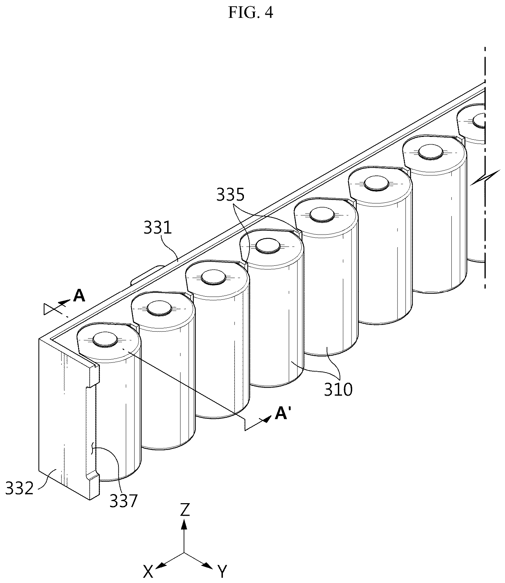

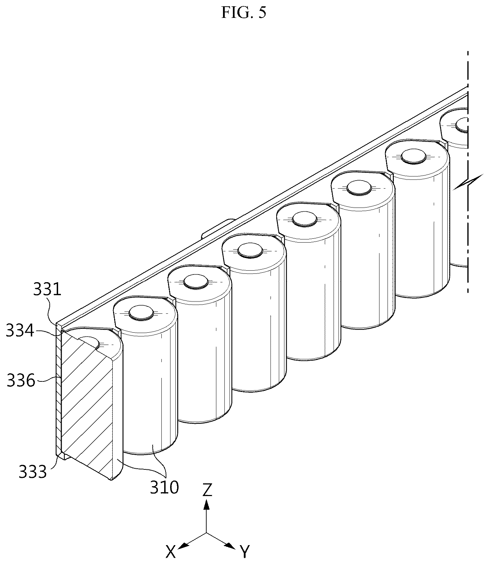

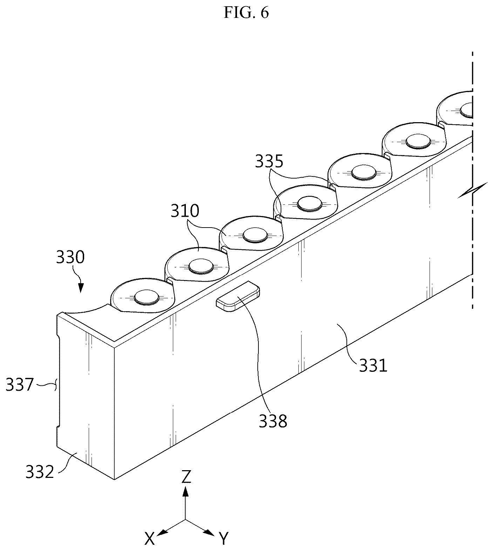

FIG. 3 is a diagram showing the inner side wall 330 of the battery pack according to an embodiment of the present disclosure. FIG. 4 is a diagram showing the inner side wall 330 and the battery cells 310 of the battery pack according to an embodiment of the present disclosure. FIG. 5 is a perspective view showing a cross section taken along the line A-A' in FIG. 4. FIG. 6 is a diagram showing the inner side wall 330 and the battery cells 310 of the battery pack according to an embodiment of the present disclosure.

Referring to FIGs. 3 to 6, at least some of the plurality of battery cells 310 of the battery pack according to an embodiment of the present disclosure may be fixed to the inner side wall 330. The inner side wall 330 may extend along X axis direction. The inner side wall 330 may include a wall head 332 at two ends in X axis direction. The wall head 332 may have a slot 337. The inner side wall 330 may include a bottom rib 333 protruded inward. Additionally, the inner side wall 330 may include a top rib 334 protruded inward. The top rib 334 may be located at a higher position than the bottom rib 333. The plurality of battery cells 310 may be fixed between the bottom rib 333 and the top rib 334. The inner side wall 330 may include a curved portion 336 formed on the inner side. The curved portion 336 may be curved along the side of the battery cells 310. The curved portion 336 may support the side of the battery cells 310. The inner side wall 330 may include a plurality of partition portions 335 protruded inward. Each partition portion 335 may protrude between the plurality of battery cells 310.

By this configuration of the present disclosure, the plurality of battery cells 310 may be stably fixed and supported by the inner side wall 330. Accordingly, stiffness of the battery pack may be improved.

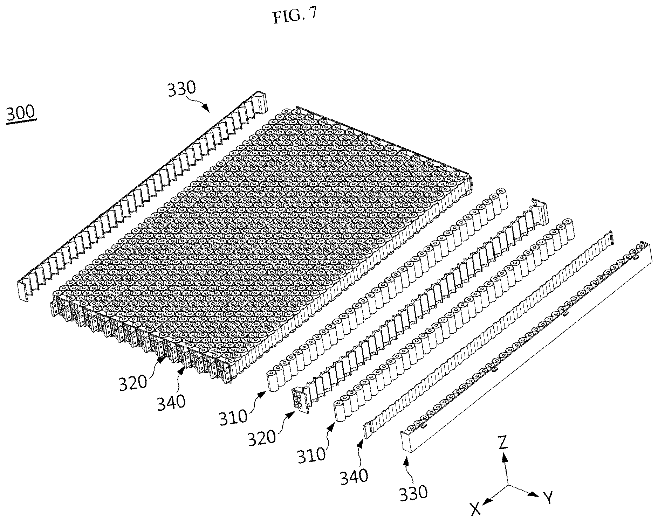

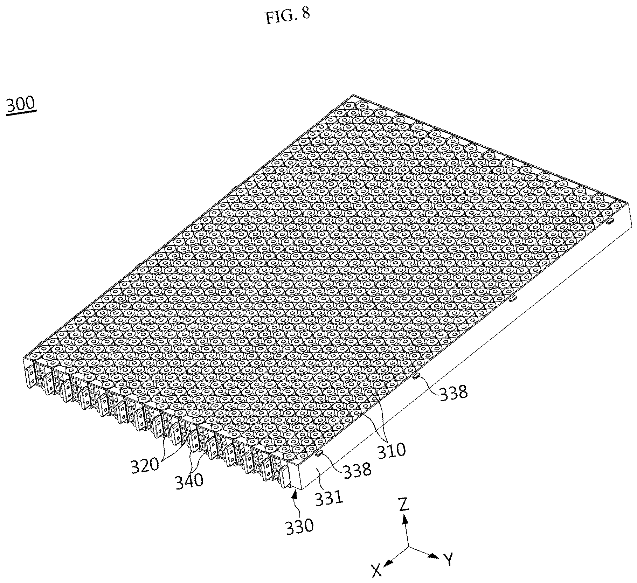

FIG. 7 is an exploded view showing some components of the cell array structure 300 of the battery pack according to an embodiment of the present disclosure. FIG. 8 is a perspective view showing the cell array structure 300 of the battery pack according to an embodiment of the present disclosure. Referring to FIGs. 7 and 8, the battery pack according to an embodiment of the present disclosure may include the cell array structure 300. The cell array structure 300 may include a pair of inner side walls 330, a plurality of side structures 320, a plurality of cooling units 340 and the plurality of battery cells 310.

The side structure 320 may extend along X axis direction. The side structure 320 may fix and support the plurality of battery cells 310. The side structure 320 may include a plurality of side structures.

The cooling unit 340 may extend along X axis direction. The cooling unit 340 may contact the plurality of battery cells 310. The cooling unit 340 may include a plurality of cooling units. Cooling liquids or cooling gases may flow through the cooling unit 340.

The side structure 320, the plurality of battery cells 310 and the cooling unit 340 may be arranged in an alternating manner. The pair of inner side walls 330 may be disposed on the outermost sides of the cell array structure 300.

The cell array structure 300 may be filled with resin. The resin may couple, fix or attach the components of the cell array structure 300. Additionally, the resin may improve stiffness the cell array structure 300.

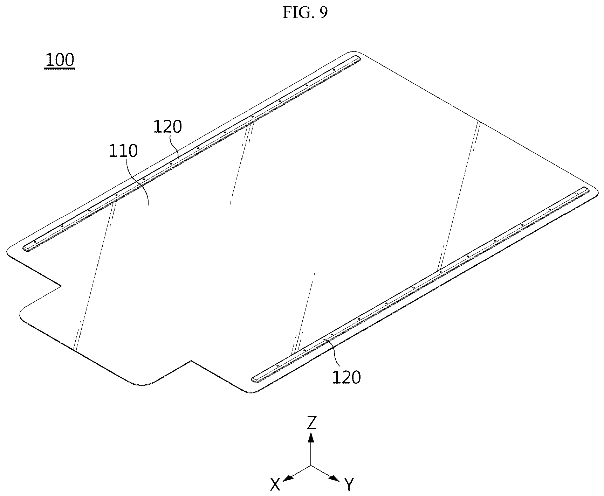

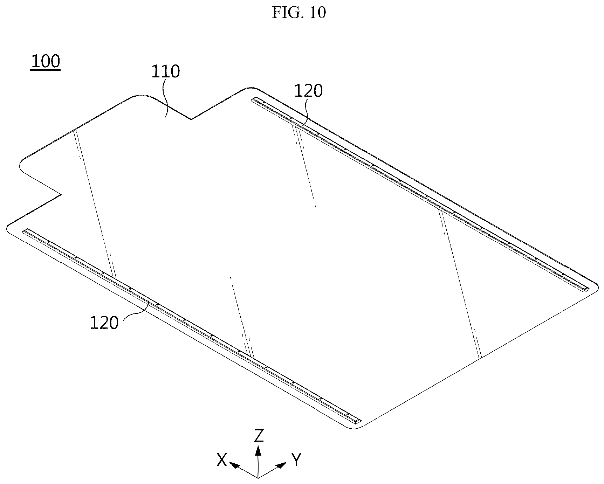

FIG. 9 is a perspective view showing the base plate 100 of the battery pack according to an embodiment of the present disclosure. FIG. 10 is a diagram showing the base plate 100 of the battery pack according to an embodiment of the present disclosure when viewed from bottom. Referring to FIGs. 9 and 10, the base plate 100 according to an embodiment of the present disclosure may include a flat portion 110 and a bending portion 120. The bending portion 120 may be formed by bending at least part of the flat portion 110. The bending portion 120 may bend in +Z axis direction. The bending portion 120 may extend along X axis direction. The bending portion 120 may include a pair of bending portions.

By this configuration of the present disclosure, the bending portion 120 may improve stiffness of the base plate 100.

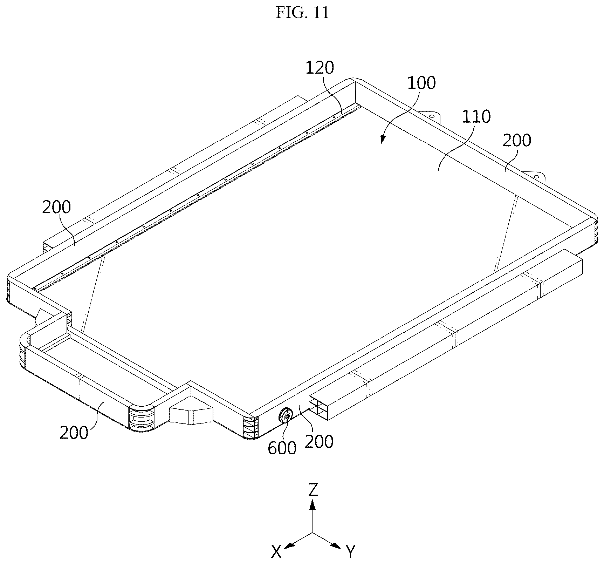

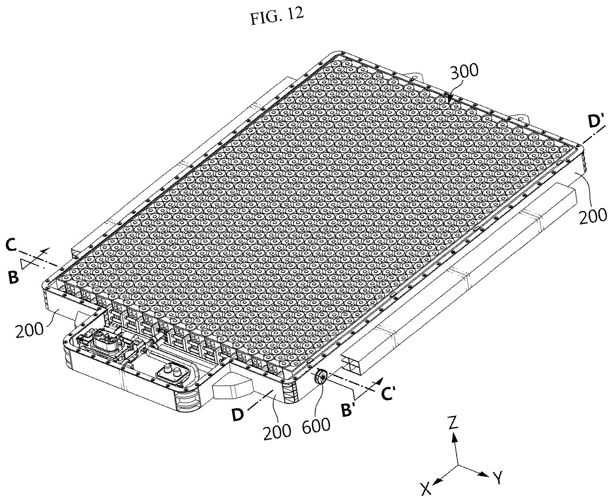

FIG. 11 is a perspective view showing the base plate 100 and the outer side wall 200 of the battery pack according to an embodiment of the present disclosure. FIG. 12 is a diagram showing some components of the battery pack according to an embodiment of the present disclosure. Referring to FIGs. 11 and 12, the bending portion 120 of the battery pack according to an embodiment of the present disclosure may be located on the inner side of the outer side wall 200. The outer side wall 200 may extend along the periphery of the base plate 100. The bending portion 120 may be located adjacent to the outer side wall 200. Alternatively, the bending portion 120 may contact the outer side wall 200.

Each of the bending portion 120 and the inner side wall 330 may extend along an edge of the base plate 100.

By this configuration of the present disclosure, the bending portion 120 may improve stiffness of the base plate 100. Additionally, the bending portion 120 may support the cell array structure 300, and prevent sags in the base plate 100.

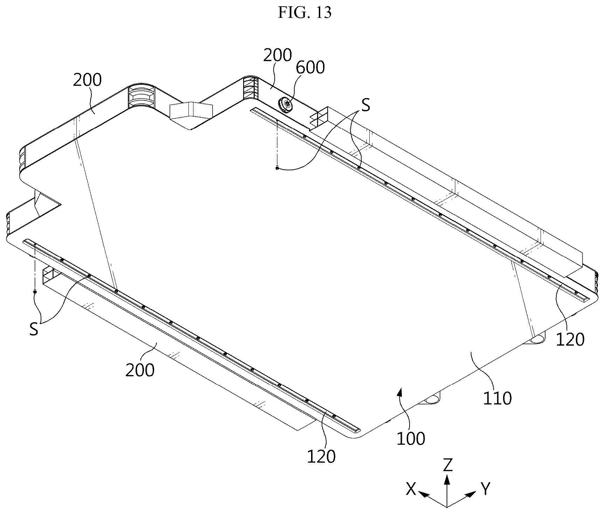

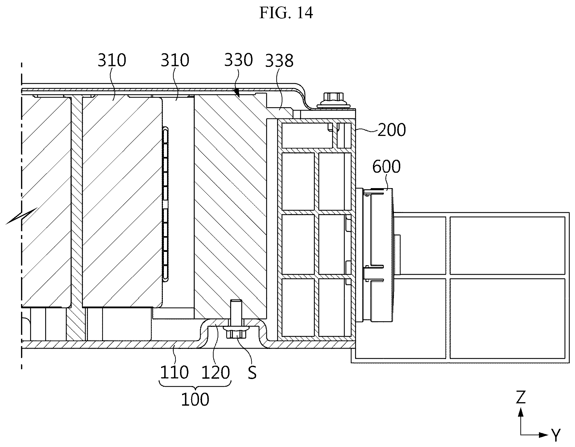

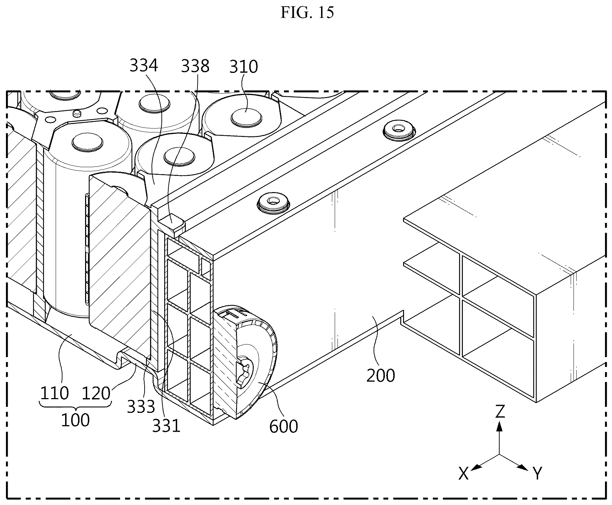

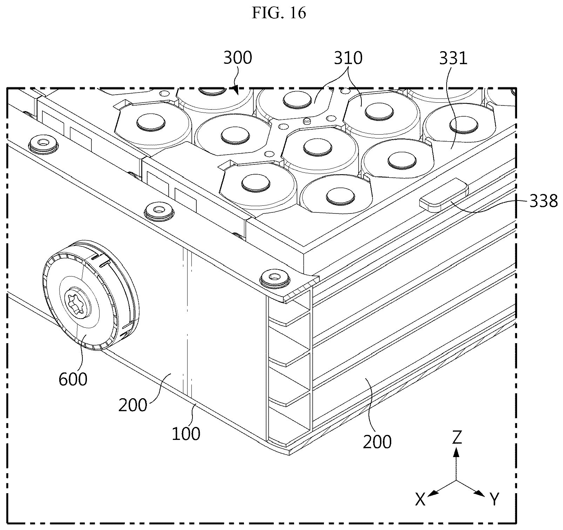

FIG. 13 is a perspective view showing some components of the battery pack according to an embodiment of the present disclosure when viewed from bottom. FIG. 14 is a schematic cross-sectional view of FIG. 12, taken along the line B-B'. FIG. 15 is a perspective view showing a cross section taken along the line C-C' in FIG. 12. FIG. 16 is a perspective view showing a cross section taken along the line D-D' in FIG. 12.

Referring to FIGs. 12 to 16, the battery pack according to an embodiment of the present disclosure may further include a fastening member S to fasten the base plate 100 to the inner side wall 330. The fastening member S may be fastened to the base plate 100 and the bottom of the inner side wall 330. The fastening member S may pass through the base plate 100. The fastening member S may include a plurality of fastening members. Additionally, the fastening members S may be arranged along X axis direction.

The cell array structure 300 may be fastened, fixed, coupled or attached to the base plate 100 or the outer side wall 200. When the inner side wall 330 is fastened to the outer side wall 200 in X axis direction or Y axis direction, a structure for fastening may be necessary. Additionally, an empty space between the inner side wall 330 and the outer side wall 200 may be increased. Accordingly, energy density of the battery pack may be lowered.

In contrast, by this configuration of the present disclosure, as the inner side wall 330 is fastened to the base plate 100 in Z axis direction, the empty space between the inner side wall 330 and the outer side wall 200 may be reduced. Accordingly, energy density of the battery pack may be improved.

Referring to FIGs. 12 to 16, the inner side wall 330 of the battery pack according to an embodiment of the present disclosure may be coupled to the bending portion 120. Accordingly, the cell array structure 300 may be located on the bending portion 120.

By this configuration of the present disclosure, a space may be formed between the flat portion 110 and the cell array structure 300. Accordingly, it may be easy to control the venting of the battery cells 310. Additionally, it may be easy to cool the battery cells 310.

Referring to FIGs. 12 to 16, the battery pack according to an embodiment of the present disclosure may further include the fastening member S that passes through the bending portion 120, and is configured to fasten the base plate 100 to the inner side wall 330. At least part of the fastening member S may be inserted into the inner side wall 330. Additionally, at least part of the fastening member S may be located at the space formed by the bending portion 120. Additionally, the fastening member may pass through the bending portion 120.

By this configuration of the present disclosure, the fastening member S may not protrude out of the flat portion 110. Accordingly, assembly efficiency of the battery pack may be improved. Additionally, space efficiency of the battery pack may be improved.

Referring to FIGs. 12 to 16, the inner side wall 330 of the battery pack according to an embodiment of the present disclosure may include a guide 338 that protrudes outward. The guide 338 may be formed on the outer surface of the inner side wall 330. Additionally, the guide 338 may protrude toward the outer side wall 200. The guide 338 may include a plurality of guides. The guides 338 may be arranged along X axis direction.

Additionally, the guide 338 may be mounted on the outer side wall 200. The guide 338 may contact the top of the outer side wall 200. Additionally, the outer side wall 200 may support the guide 338.

By this configuration of the present disclosure, the load of the cell array structure 300 may be transmitted to the outer side wall 200 through the guide 338. Alternatively, the outer side wall 200 may support the guide 338, and thereby support the cell array structure 300. The load of the cell array structure 300 may be distributed through the base plate 100 and the guide 338. Accordingly, the cell array structure 300 may be stably supported.

Referring to FIGs. 12 to 16, the gap may be formed between the battery cells 310 fixed to the inner side wall 330 of the battery pack according to an embodiment of the present disclosure and the flat portion 110. The base plate 100 may be made of a metal having electrically conductive properties. The inner side wall 330 located on the bending portion 120 may keep the battery cells 310 and the flat portion 110 apart.

By this configuration of the present disclosure, the battery cells 310 and the base plate 100 may be electrically isolated from each other.

Additionally, because the space is formed between the flat portion 110 and the cell array structure 300, it may be easy to control the venting of the battery cells 310. Additionally, it may be easy to cool the battery cells 310.

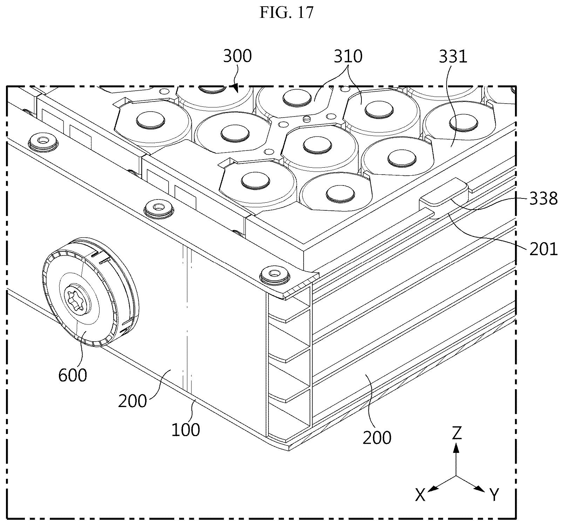

FIG. 17 is a diagram showing a variation of FIG. 16. Referring to FIG. 17, the outer side wall 200 of the battery pack according to an embodiment of the present disclosure may include an accommodation groove 201 on top. The accommodation groove 201 may be in a downward stepped shape from the top of the side wall. The accommodation groove 201 may include a plurality of accommodation grooves. The accommodation groove 201 may be disposed and located in a one-to-one correspondence with the guide 338. The guide 338 may be received in the accommodation groove 201.

By this configuration of the present disclosure, the accommodation groove 201 may stably align the position of the cell array structure 300. Accordingly, assembly efficiency of the battery pack may be improved.

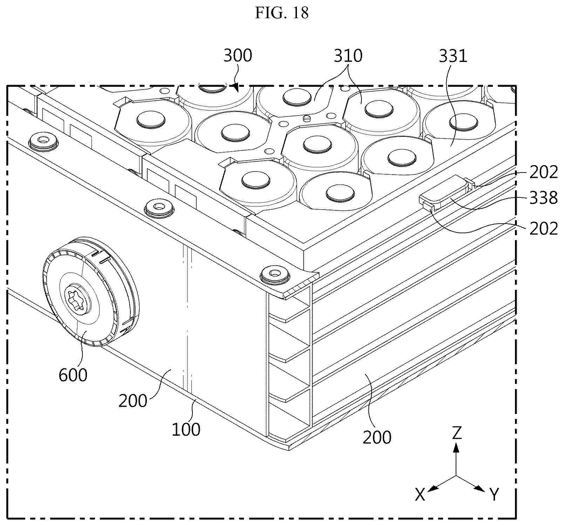

FIG. 18 is a diagram showing another variation of FIG. 16. Referring to FIG. 18, the outer side wall 200 of the battery pack according to an embodiment of the present disclosure may include a pair of protrusions 202 on top. The pair of protrusions 202 may be located spaced a predetermined distance apart from each other in X axis direction. The pair of protrusions 202 may include a plurality of protrusions. The pair of protrusions 202 may be disposed and located in a one-to-one correspondence with the guide 338. The guide 338 may be located between the pair of protrusions 202.

By this configuration of the present disclosure, the protrusions 202 may stably align the position of the cell array structure 300. Accordingly, assembly efficiency of the battery pack may be improved.

A vehicle according to the present disclosure may include the above-described battery pack according to the present disclosure. The battery pack according to the present disclosure may be used in vehicle applications, for example, electric vehicles or hybrid electric vehicles. Additionally, in addition to the battery pack, the vehicle according to the present disclosure may further include a variety of other components included in the vehicle. For example, the vehicle according to the present disclosure may further include a car body, a motor, a controller such as an electronic control unit (ECU), etc.

The terms indicating directions such as upper, lower, left, right, front, rear, inner and outer are used for convenience of description, but it is obvious to those skilled in the art that the terms may change depending on the position of the stated element or an observer.

Although the present disclosure has been hereinabove described by a limited number of embodiments and drawings, the present disclosure is not limited thereto, and it is obvious to those skilled in the art that a variety of changes and modifications may be made thereto within the technical aspect of the present disclosure and the appended claims and equivalents thereof.

## Claims

1. A battery pack comprising:
a base plate;
an outer side wall coupled to an upper surface of the base plate;
a plurality of battery cells located on the base plate and forming an array; and
an inner side wall coupled to the upper surface of the base plate, and located between the plurality of battery cells and the outer side wall.

2. The battery pack according to claim 1, further comprising:
a fastening member configured to fasten the base plate to the inner side wall.

3. The battery pack according to claim 1, wherein the base plate includes:
a flat portion; and
a bending portion protruded upward from the flat portion, and
wherein the inner side wall is coupled to the bending portion.

4. The battery pack according to claim 3, wherein the bending portion is located on an inner side of the outer side wall.

5. The battery pack according to claim 3, wherein the bending portion and the inner side wall extend along an edge of the base plate.

6. The battery pack according to claim 3, further comprising:
a fastening member passing through the bending portion and configured to fasten the base plate to the inner side wall.

7. The battery pack according to claim 3, wherein at least some of the plurality of battery cells are fixed to the inner side wall.

8. The battery pack according to claim 7, wherein a gap is formed between the battery cells fixed to the inner side wall and the flat portion.

9. The battery pack according to claim 1, wherein the inner side wall includes a guide that protrudes outward, and
wherein the guide is mounted on the outer side wall.

10. The battery pack according to claim 9, wherein the outer side wall includes an accommodation groove on top, and
wherein the guide is received in the accommodation groove.

11. The battery pack according to claim 9, wherein the outer side wall includes a pair of protrusions on top, and
wherein the guide is located between the pair of protrusions.

12. A vehicle comprising the battery pack according to any one of claims 1 to 11.
